# EUROPÄISCHE PATENTANMELDUNG

(11) **EP 2 336 624 A2**
(43) Veröffentlichungstag der Anmeldung: **22.06.2011**
(21) Anmeldenummer: 10015301.4
(22) Anmeldetag: 04.12.2010
(51) Int. Cl.: F16L 21/08

(54) **Muffenverbindung sowie Klemmring zur Verwendung bei einer Muffenverbindung**

(30) Priorität: 16.12.2009 DE 202009017002 U
(71) Anmelder: STR Rohr GmbH, 6410 Telfs (AT)
(72) Erfinder:
(74) Vertreter: Graf Glück Habersack Kritzenberger

(57) **Zusammenfassung**

Muffenverbindung zum Verbinden zweier Rohre (1,2), Rohrstücke oder dergleichen, mit einem dem einen Rohr zugeordneten Muffenende mit Muffe (4), in welches ein muffenloses Ende des anderen Rohres eingeführt ist, wobei die Muffe wenigstens einen Muffeninnenraum und an einer Muffenöffnung einen nach innen ragenden Muffenrand (4,2) bildet, mit einem wenigstens zweiteiligen Klemmring (6), dessen ringsegmentförmige Klemmringteile das muffenlose Ende des zweiten Rohres umfassen, mit ersten Ringabschnitten (7) die Muffe im Muffeninnenraum formschlüssig hintergreifen und an Klemmringabschnitten oder Stegen (10), die durch die Muffenöffnung aus der Muffe herausgeführt sind, durch Spannelemente miteinander auf dem zweiten Rohr verspannt sind, wobei die Klemmringteile an der der Muffe abgewandten Seite der Spannelemente mit Abstützelementen (8) ausgebildet sind.

## Beschreibung

Die Erfindung bezieht sich auf eine Muffenverbindung gemäß Oberbegriff Patentanspruch 1 sowie auf einen Klemmring gemäß Oberbegriff Patentanspruch 7.

Muffenverbindungen dieser Art sind bekannt (AT 372 769, EP 1 055 858 A1) und dienen zur fluid- oder flüssigkeitsdichten Verbindung sowie zugleich auch zur mechanischen Verbindung zwischen zwei Rohren oder Rohrstücken. Durch die mechanische Verbindung wird ein Lösen der Muffenverbindung insbesondere durch äußere Einwirkung, beispielsweise Vibrationen, und/oder durch den Innendruck eines die Muffenverbindung aufweisenden Leitungs- oder Rohrsystems verhindert. Für die Herstellung der mechanischen Verbindung dienen Klemmringe, die beispielsweise wenigstens zweiteilig mit zwei Klemmringteilen ausgebildet sind. Der jeweilige Klemmring ist das in die Muffe eingeschobene muffenlose Ende eines Rohrstückes umgreifend auf diesem Rohrstück festgeklemmt und hintergreift mit einem Ringabschnitt die Muffe formschlüssig.

Das Verspannen der Klemmringteile auf dem muffenlosen Rohrende muss außerhalb der Muffe folgen, und zwar an aus dem Muffeninnenraum herausgeführten Klemmringabschnitten oder Stegen, was zu einem Verkippen der Klemmringteile bzw. der in der Muffenöffnung aufgenommenen Ringabschnitte führt.

Aufgabe der Erfindung ist es, eine Muffenverbindung aufzuzeigen, bei der ein Verspannen der Klemmringteile außerhalb der Muffe ohne ein Verkippen der Klemmringteile möglich ist. Zur Lösung dieser Aufgabe ist eine Muffenverbindung entsprechend dem Patentanspruch 1 ausgebildet. Klemmringe zur Verwendung bei einer solchen Muffenverbindung sind Gegenstand des Patentanspruchs 7.

Durch die erfindungsgemäße Ausbildung wird eine Abstützung der verspannten Klemmringteile beidseitig von dem jeweiligen Spannelement an der Außenfläche des muffenlosen Rohrendes erreicht, und zwar einerseits an dem im Muffeninnenraum aufgenommenen Ringabschnitt und andererseits an den Abstützmitteln außerhalb der Muffe.

Bei einer bevorzugten Ausführungsform der Erfindung sind die Abstützmittel von Ringsegmenten oder Ringabschnitten gebildet, die jeweils mit den aus der Muffe herausgeführten Enden der Stege verbunden sind. Bevorzugt erstrecken sich diese Ringabschnitte zwischen den Stegen jedes Klemmringteils parallel zu demjenigen Ringabschnitt, der in der Muffenöffnung aufgenommen ist und die mechanische, formschlüssige Verbindung zwischen den Rohren oder Rohrabschnitten im Bereich der Muffenverbindung bewirkt.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1: in vereinfachter schematischer Darstellung eine Muffenverbindung gemäß der Erfindung zwischen zwei Rohren;
- Fig. 2: in perspektivischer Einzeldarstellung eines der Rohre der Muffenverbindung der Figur 1 zusammen mit dem an dem Rohrende vorgesehenen Klemmring für die axiale mechanische Sicherung der Muffenverbindung;
- Fig. 3: in perspektivischer Einzeldarstellung den zweiteiligen Klemmring der Figur 2.

In den Figuren sind 1 und 2 zwei Rohre eines Rohrsystems für ein unter Druck, beispielsweise unter hohem Druck stehendes Fluid, beispielsweise flüssiges Fluid, z.B. für unter Druck stehendes Wasser. Die beiden Rohre 1 und 2 sind über eine Muffenverbindung 3 fluid- oder flüssigkeitsdicht sowie auch mechanisch fest miteinander verbunden, und zwar insbesondere in der Weise, dass durch den Innendruck des Rohrsystems bzw. der Rohre 1 und 2 kein Lösen der Muffenverbindung 3 Auseinanderbewegen der Rohre 1 und 2 erfolgen kann.

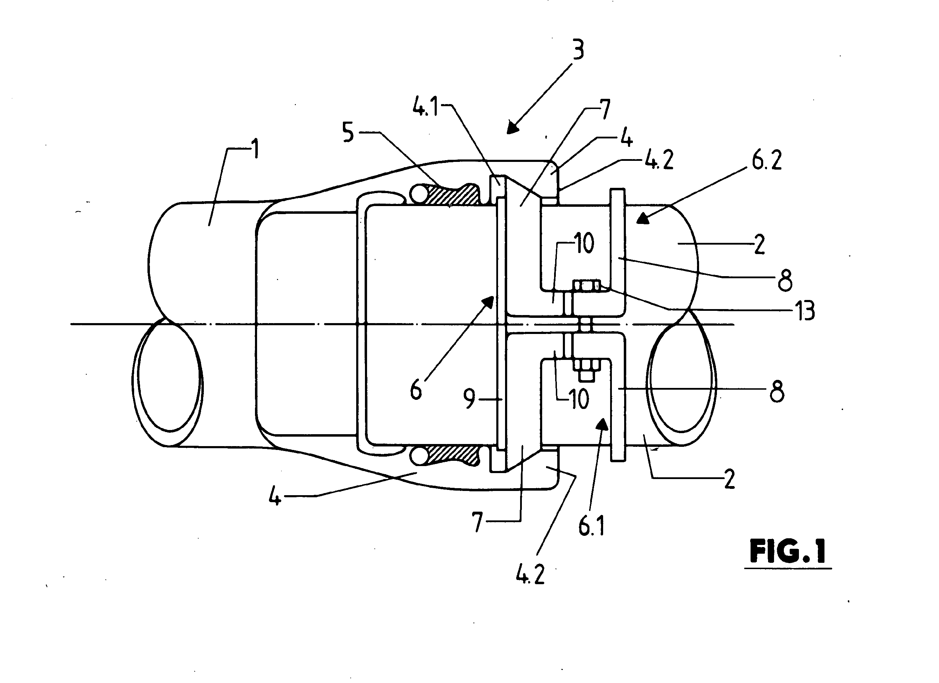

Zur Bildung der Muffenverbindung 3 sind die Rohre 1 und 2 jeweils an einem Ende mit einer Muffe 4 und am anderen Ende muffenlos ausgebildet. Bei der für die Figur 1 gewählten Darstellung sind lediglich die Muffe 4 bzw. das mit der Muffe versehene Muffenende des Rohres 1 und das muffenlose Ende des Rohres 2 wiedergegeben. Zur Realisierung der Muffenverbindung 3 ist das Rohr 2 mit seinem muffenlosen Ende in die Muffe 4 bzw. in das mit der Muffe 4 versehene Ende des Rohres 1 eingeführt. In der Muffe 4 ist zur Erzielung der fluid- oder flüssigkeitsdichten Verbindung zwischen den Rohren 1 und 2 wenigstens eine den Spalt zwischen den Rohren 1 und 2 abdichtende, das Rohr 2 umschließende Ringdichtung 5 aus einem gummielastischen Material angeordnet.

Zur Erzielung der mechanischen Verbindung zwischen den Rohren 1 und 2 ist auf dem Rohr 2 ein Klemmring durch Festklemmen befestigt, der mit einem Ringabschnitt 7 in einem Muffeninnenraum 4.1 der Muffe 4 aufgenommen ist und die Muffe 4 im Bereich der Muffenöffnung an einem radial nach innen gerichteten Muffenrand 4.2 hintergreift. Mit einem weiteren Ringabschnitt 8 stützt sich der Klemmring 6 außerhalb der Muffe 4 bzw. der Muffenverbindung 3 an der Außenfläche des Rohres 2 ab.

Auf der Außenfläche des Rohres 2 ist innerhalb des Muffeninnenraumes 4.1 ein ring- oder teilringförmiger Vorsprung 9 aufgebracht, beispielsweise im einfachsten Fall durch eine oder mehrere ringförmige oder teilringförmige, konzentrisch zur Achse des Rohres 2 verlaufende Schweißnähte, gegen die sich der Klemmring 6 mit dem Ringabschnitt 7 abstützt, sodass durch den Innendruck innerhalb der Rohre 1 und 2 erzeugte Axialkräfte zwischen den Rohren 1 und 2 über den wenigstens einen Vorsprung 9, den Ringabschnitt 7 auf den ringartigen Muffenrand 4.2 übertragen werden und damit ein Auseinanderbewegen der Rohre 1 und 2 verhindert wird.

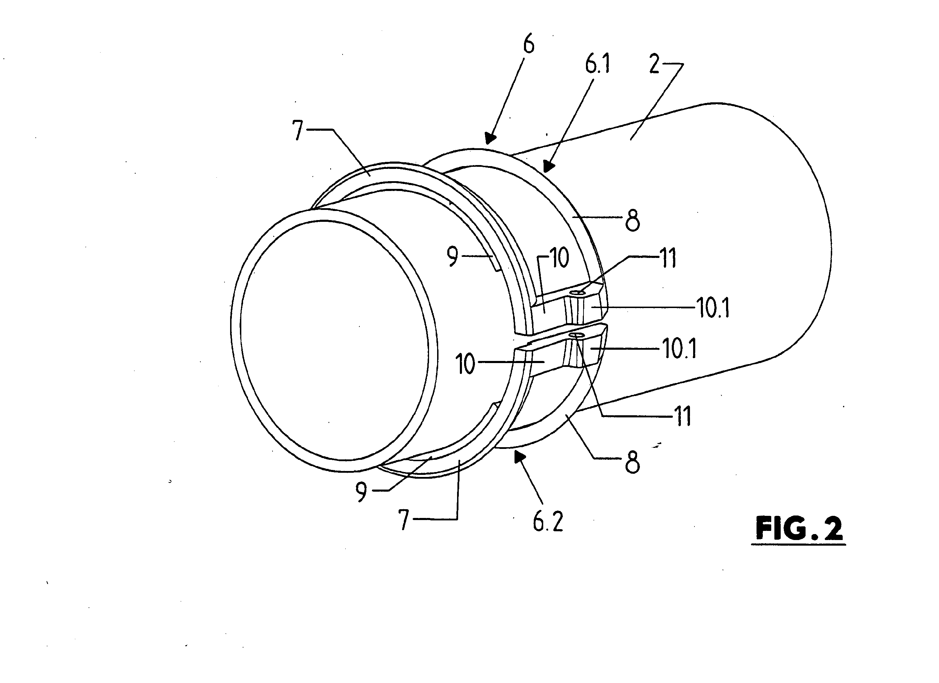

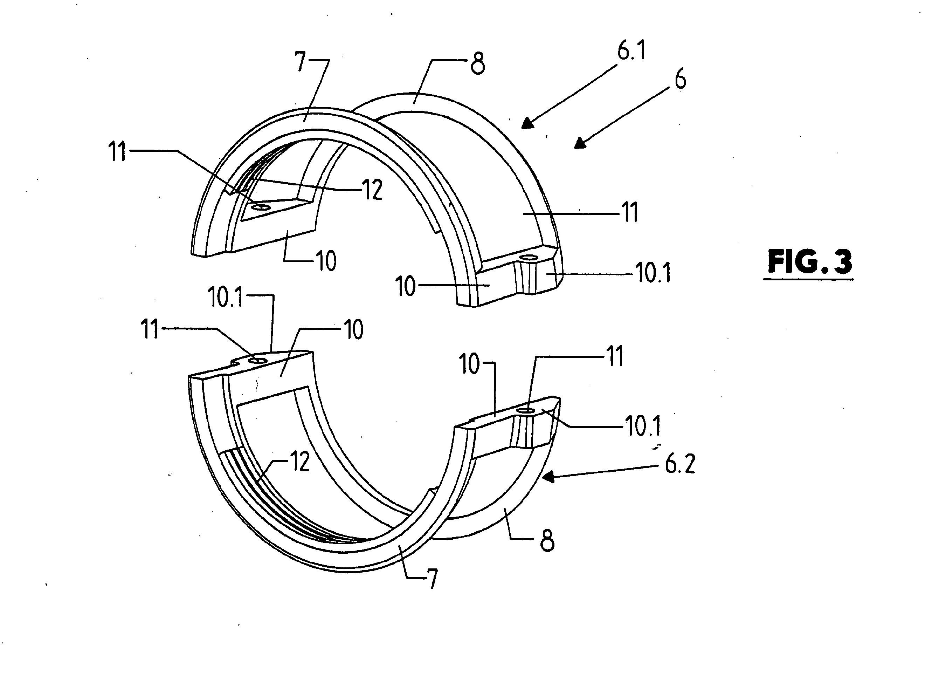

Wie die Figuren 2 und 3 zeigen ist der Klemmring 6 zweiteilig ausgeführt, d.h. er besteht aus zwei Klemmringteilen 6.1 und 6.2, die bei der dargestellten Ausführungsform identisch ausgebildet sind und jeweils die beiden kreisbogenförmigen Ringabschnitte 7 und 8 aufweisen, die an ihren beiden Enden durch einen Klemmringabschnitt oder Steg 10 miteinander verbunden sind, und zwar zu einer Art kreisbogenförmig gekrümmten rahmenartigen Struktur. Im montierten Zustand sind die Stege 10 mit ihrer Längserstreckung parallel zur Achse der Rohre 1 und 2 orientiert und jeweils aus dem Muffeninnenraum 4.1 durch die Muffenöffnung so herausgeführt. Der jeweilige Ringabschnitt 7 befindet sich damit innerhalb des Muffeninnenraumes 4.1 und der zugehörige Ringabschnitt 8 außerhalb des Muffeninnenraumes 4.1. Durch Öffnungen 11 benachbarter Stege 10 durchgreifende Spannschrauben 12 (Maschinenschrauben mit Muttern) sind die beiden das Rohr 2 an seiner Außenseite umschließenden Klemmringteile 6.1 und 6.2 miteinander derart verspannt, dass sie angepresst gegen die Außenfläche des Rohres 2 anliegen.

Wie insbesondere die Figur 3 zeigt, sind die kreisbogenförmig gekrümmten Ringabschnitte 7 an der konvexen Innenseite mit einer Profilierung 13 versehen, die von mehreren teilringförmigen, konzentrisch zur Achse des Klemmringes 6 verlaufenden Vorsprüngen und dazwischen liegenden Vertiefungen gebildet ist. Die Vorsprünge weisen beispielsweise ein widerhakenartiges Profil in der Weise auf, dass durch dieses Profil beim Verspannen des Klemmringes 6 bzw. der Klemmringteile 6.1 und 6.2 auf der Außenfläche des Rohres 2 durch die gegen die Rohraußenfläche anliegende Profilierung 13 eine zusätzliche axiale Sicherung des Klemmringes 6 erreicht ist.

Die Muffenverbindung 3 wird beispielsweise so hergestellt, dass das Rohr 2 in die mit der Dichtung 5 vorbereitete Muffe 4 eingeschoben und dann die beiden Klemmringteile 6.1 und 6.2 mit ihrem Ringabschnitt 7 in den Muffeninnenraum 4.1 derart eingesetzt werden, dass sie den Muffenrand 4.2 hintergreifen. Um das Einsetzen der Ringabschnitte 7 zu ermöglichen, ist die Muffe 4 beispielsweise im Bereich des nach innen gerichteten Muffenrandes 4.2 mit entsprechenden Unterbrechungen ausgebildet.

Nach dem Einführen der Ringabschnitte 7 in den Muffeninnenraum 4.1 erfolgt das Verspannen der beiden Klemmringteile 6.1 und 6.2 mit den die Öffnungen 11 durchgreifenden Spannschrauben 12. Die Öffnungen 11 und die Spannschrauben 12 befinden sich dabei außerhalb der Muffe 4, sodass die Spannschrauben 12 für entsprechende Werkzeuge zugänglich sind.

Die Ringabschnitte 7, die der mechanischen Verbindung der Rohre 1 und 2 dienen sind bei der dargestellten Ausführungsform massiver, d.h. mit einem größeren Querschnitt ausgeführt als die Ringabschnitte 8, die jeweils lediglich der Abstützung der Klemmringteile 6.1 und 6.2 außerhalb der Muffe 3 dienen und durch die verhindert wird, dass sich die Klemmringteile 6.1 und 6.2 beim Spannen der Spannschrauben 12 verkippen. Durch die Ringabschnitte 7 und 8 und durch die zwischen diesen Ringabschnitten an den Stegen 10 angreifenden Spannschrauben ergibt sich eine das Verkippen der Klemmringteile 6.1 und 6.2 verhindernde zweiseitige Abstützung der Klemmringteile 6.1 und 6.2 an der Außenfläche des Rohres 2. Um auch im Bereich der Öffnungen 11 eine ausreichend große Materialstärke für die Stege 10 zu erhalten, andererseits diese Stege 10 an ihrem die Muffenöffnung durchgreifenden Teilabschnitt möglichst schlank auszubilden, sind die Stege 10 im Bereich der Öffnungen 11 jeweils verstärkt ausgeführt, und zwar mit einem breiteren Teilabschnitt 10.1, der bis an den Übergang zu dem Ringabschnitt 8 reicht.

Die Klemmringteile 6.1 und 6.2 sind jeweils einstückig aus einem bruchfesten Werkstoff, beispielsweise aus einem metallischen Werkstoff, bevorzugt aus Stahl gefertigt.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrundeliegende Erfindungsgedanke verlassen wird.

### Bezugszeichenliste

- 1, 2: Rohr
- 3: Muffenverbindung
- 4: Muffe
- 4.1: Muffeninnenraum
- 4.2: ringförmiger Muffenabschnitt
- 5: Dichtung
- 6: Klemmring
- 6.1, 6.2: Klemmringteil
- 7, 8: Ringabschnitt
- 10: Steg
- 10.1: verstärkter Stegabschnitt
- 11: Öffnung für Spannschraube
- 12: Spannschraube (Gewindeschraube mit Mutter)
- 13: Profilierung

## Patentansprüche

1. Muffenverbindung zum Verbinden zweier Rohre (1, 2), Rohrstücke oder dergleichen, mit einem dem einen Rohr (1) zugeordneten Muffenende mit Muffe (4), in welches ein muffenloses Ende des anderen Rohres (2) eingeführt ist, wobei die Muffe (4) wenigstens einen Muffeninnenraum (4.1) und an einer Muffenöffnung einen nach innen ragenden Muffenrand (4.2) bildet, mit einem wenigstens zweiteiligen Klemmring (6), dessen ringsegmentförmige Klemmringteile (6.1, 6.2) das muffenlose Ende des zweiten Rohres (2) umfassen, mit ersten Ringabschnitten (7) die Muffe (4) im Muffeninnenraum (4.1) formschlüssig hintergreifen und an Klemmringabschnitten oder Stegen (10), die durch die Muffenöffnung aus der Muffe (4) herausgeführt sind, durch Spannelemente (12) miteinander auf dem zweiten Rohr (2) verspannt sind, wobei die Klemmringteile (6.1, 6.2) an der der Muffe (4) abgewandten Seite der Spannelemente (12) mit Abstützelementen (8) ausgebildet sind,
**dadurch gekennzeichnet,**
**dass** die Abstützelemente (8) sich an der Außenfläche des zweiten Rohres (2) abstützen.

2. Muffenverbindung nach Anspruch 1, **dadurch gekennzeichnet, dass** die Abstützelemente von Ringsegmenten oder Ringabschnitten (8) gebildet sind.

3. Muffenverbindung nach Anspruch 2, **dadurch gekennzeichnet, dass** die die Abstützmittel bildenden Ringsegmente oder Ringabschnitte (8) an dem den jeweiligen in der Muffenöffnung (4.1) aufgenommenen Ringabschnitt (7) entfernt liegenden Ende der Klemmringabschnitte oder Stege (10) vorgesehen sind.

4. Muffenverbindung nach einem der vorhergehenden Ansprüche, **dadurch gekennzeichnet, dass** die Klemmringteile (6.1, 6.2) jeweils einen ersten in der Muffenöffnung (4.1) aufgenommenen Ringabschnitt (7) und einen zweiten die Abstützmittel bildenden Ringabschnitt (8) aufweisen, und dass beide parallel und im Abstand voneinander angeordnete Ringabschnitte (7, 8) zumindest an ihren Enden über jeweils einen Klemmringabschnitt oder Steg (10) miteinander

5. Muffenverbindung nach einem der vorhergehenden Ansprüche, **dadurch gekennzeichnet, dass** die Klemmringteile (6.1, 6.2) einstückig aus einem bruchfesten Werkstoff, beispielsweise aus einem metallischen Werkstoff, vorzugsweise aus Eisen oder Stahl gefertigt sind.

6. Muffenverbindung nach einem der vorhergehenden Ansprüche, **dadurch gekennzeichnet, dass** in den Klemmringabschnitten oder Stegen (10) Öffnungen (11) zum Durchführen der Spannmittel (12) vorgesehen sind.

7. Klemmring zur Verwendung bei einer Muffenverbindung zum Verbinden zweier Rohre (1, 2), Rohrstücke oder dergleichen, mit wenigstens zwei Klemmringteilen (6.1, 6.2), die jeweils wenigstens einen in einem Muffeninnenraum (4.1) einbringbaren ersten Ringabschnitt (7) mit von diesem wegstehenden Klemmringabschnitten oder Stegen (10) aufweisen und durch an den Klemmringabschnitten oder Stegen (10) angreifende Spannelementen (12) auf einem der Rohre (2) dieses umgreifend verspannbar sind, wobei die Klemmringteile (6.1, 6.2) an der dem ersten Ringabschnitt (7) abgewandten Seite der Spannelemente (12) mit Abstützelementen (8) ausgebildet sind,
**dadurch gekennzeichnet,**
**dass** die Abstützelemente (8) für eine Anlage gegen die Außenfläche des Rohres (2) ausgebildet sind.

8. Klemmring nach Anspruch 7, **dadurch gekennzeichnet, dass** die Abstützelemente von Ringsegmenten oder Ringabschnitten (8) gebildet sind.

9. Klemmring nach Anspruch 8, **dadurch gekennzeichnet, dass** die die Abstützmittel bildenden Ringsegmente oder Ringabschnitte (8) an dem den jeweiligen in der Muffenöffnung (4.1) aufgenommenen Ringabschnitt (7) entfernt liegenden Ende der Klemmringabschnitte oder Stege (10) vorgesehen sind.

10. Klemmring nach einem der vorhergehenden Ansprüche, **dadurch gekennzeichnet, dass** die Klemmringteile (6.1, 6.2) jeweils einen ersten Ringabschnitt (7) und einen zweiten die Abstützmittel bildenden Ringabschnitt (8) aufweisen, und dass beide parallel und im Abstand voneinander angeordnete Ringabschnitte (7, 8) zumindest an ihren Enden über jeweils einen Klemmringabschnitt oder Steg (10) miteinander verbunden sind.

11. Klemmring nach einem der vorhergehenden Ansprüche, **dadurch gekennzeichnet, dass** die Klemmringteile (6.1, 6.2) einstückig aus einem bruchfesten Werkstoff, beispielsweise aus einem metallischen Werkstoff, vorzugsweise aus Eisen oder Stahl gefertigt sind.
